# EUROPEAN PATENT SPECIFICATION

(11) **EP 3 836 350 B1**
(45) Date of publication and mention of the grant of the patent: **07.06.2023**
(21) Application number: 19920590.7
(22) Date of filing: 15.03.2019
(51) Int. Cl.: H02J 50/10, H02J 50/20, H02J 50/40, H02J 50/80, B65G 47/00

(54) **WIRELESS POWER TRANSMISSION SYSTEM**
SYSTEM ZUR DRAHTLOSEN STROMÜBERTRAGUNG
SYSTÈME DE TRANSMISSION D'ÉNERGIE SANS FIL

(43) Date of publication of application: 16.06.2021
(73) Proprietor: OMRON Corporation, Shiokoji-dori, Shimogyo-ku, Kyoto-shi Kyoto 600-8530 (JP)
(72) Inventor: NOSAKA, Tetsuya, Kyoto-shi, Kyoto 600-8530 (JP); OBATA, Junji, Kyoto-shi, Kyoto 600-8530 (JP); MURAI, Akito, Kyoto-shi, Kyoto 600-8530 (JP)
(74) Representative: HGF
(86) International application number: PCT/JP2019/010835
(87) International publication number: WO 2020/188631

(56) References cited:
- EP-B1- 3 024 140
- WO-A1-2016/164846
- JP-A- 2011 188 733
- JP-A- 2012 191 721
- JP-A- 2017 529 053
- JP-A- 2018 117 511
- JP-A- 2018 174 704
- JP-A- 2018 182 809
- JP-B2- 5 763 833
- US-A1- 2013 099 734

## Description

### TECHNICAL FIELD

The present disclosure relates to a wireless power transmission system including a wireless power transmitter apparatus and a wireless power receiver apparatus.

### BACKGROUND ART

For example, a wireless power transmission system including a wireless power transmitter apparatus and a wireless power receiver apparatus is configured in order to supply electric power (power) to each sensor in a sensor network including a plurality of sensors.

When a radio wave propagation environment around the wireless power transmitter apparatus and/or the wireless power receiver apparatus is constantly changing due to movement of a person or an article, operating parameters of the wireless power transmitter apparatus or the wireless power receiver apparatus need to be adjusted in accordance with the change in the radio wave propagation environment.

Patent Document 1 discloses a power transmitter apparatus that increases power transmission output in accordance with surrounding conditions.

### PRIOR ART DOCUMENT

### PATENT DOCUMENT

Patent Document 1: Japanese patent laid-open publication No. JP2018-102087A.

US 2013/099734 A1, JP 5763833 B2 and EP 3024140 B1 provide certain disclosures relating to wireless power transmission systems.

### SUMMARY OF THE INVENTION

### PROBLEMS TO BE SOLVED BY THE INVENTION

When a plurality of wireless power receiver apparatuses are disposed at a plurality of different positions, radio waves attenuate by different amounts of attenuation depending on the positions of the wireless power receiver apparatus or times at which power transmission (or communication) is performed. This may undesirably reduce the coverage of the radio waves and interrupt power transmission (or communication). If operating parameters are not adjusted, the wireless power transmitter apparatus and the wireless power receiver apparatus needs to be disposed so that power transmission (or communication) can be performed even in a worst radio wave propagation environment, that is, so that power transmission (or communication) can be performed even when the coverage of radio waves is small. Therefore, it is required to adjust operating parameters of the wireless power transmitter apparatus or the wireless power receiver apparatus in accordance with a change in the radio wave propagation environment so that power transmission or communication is less likely to be interrupted.

An object of the present disclosure is to provide a wireless power transmission system capable of adjusting operating parameters of a wireless power transmitter apparatus or a wireless power receiver apparatus in accordance with a change in a radio wave propagation environment so that power transmission or communication is less likely to be interrupted.

### MEANS FOR SOLVING THE PROBLEMS

According to a wireless power transmission system according to an aspect of the present disclosure, the wireless power transmission system includes a wireless power transmitter apparatus, and at least one wireless power receiver apparatus. The wireless power transmission system wirelessly is configured to transmit power from the wireless power transmitter apparatus to the wireless power receiver apparatus. The wireless power transmission system is configured to change operating parameters of at least one of the wireless power transmitter apparatus and the wireless power receiver apparatus, so that a measured value corresponding to power transmitted from the wireless power transmitter apparatus to the wireless power receiver apparatus and made available to the wireless power receiver apparatus is increased in response to a trigger indicative of occurrence of a predetermined triggering event, wherein the operating parameters of at least one of the wireless power transmitter apparatus and the wireless power receiver apparatus are changed, so that the measured value corresponding to the power transmitted from the wireless power transmitter apparatus to the wireless power receiver apparatus and made available to the wireless power receiver apparatus is increased in advance, by a predetermined time length from the predetermined triggering event that is executed at a predetermined time.

With this configuration, the operating parameters of the wireless power transmitter apparatus or the wireless power receiver apparatus can be adjusted according to changes in the radio wave propagation environment so that interruptions in power transmission or communication are unlikely to occur.

With this configuration, by adjusting the operating parameters of the wireless power transmitter apparatus or the wireless power receiver apparatus immediately before an event associated with the wireless power receiver apparatus, the wireless power transmitter apparatus or the wireless power receiver apparatus can follow changes in the radio wave propagation environment, so that interruptions in power transmission or communication are unlikely to occur.

According to a wireless power transmission system according to an aspect of the present disclosure, the operating parameters of at least one of the wireless power transmitter apparatus and the wireless power receiver apparatus are changed from initial values learned in advance so as to maximize or optimize the power available by the wireless power received apparatus.

With this configuration, the wireless power transmission system can be operated more stably than when the adaptation is started from an arbitrary initial value.

According to a wireless power transmission system according to an aspect of the present disclosure, the wireless power transmitter apparatus includes an antenna apparatus that has a variable directivity pattern, and the operating parameters include the variable directivity pattern of the antenna apparatus.

With this configuration, the directivity pattern of the antenna apparatus can be changed as an operating parameter.

According to a wireless power transmission system according to an aspect of the present disclosure, the wireless power receiver apparatus includes an antenna apparatus that has a variable directivity pattern, and the operating parameters include the variable directivity pattern of the antenna apparatus.

With this configuration, the directivity pattern of the antenna apparatus can be changed as an operating parameter.

According to a wireless power transmission system according to an aspect of the present disclosure, the wireless power receiver apparatus includes a matching circuit that has variable impedance, and the operating parameters include the variable impedance of the matching circuit.

With this configuration, the impedance of the matching circuit can be changed as an operating parameter.

According to a wireless power transmission system according to an aspect of the present disclosure, the wireless power receiver apparatus includes a power converter circuit that has variable step-up ratio and step-down ratio, and the operating parameters include the variable step-up ratio and the step-down ratio of the power converter circuit.

With this configuration, the operating parameter can be a variable boost ratio or buck ratio of the power converter circuit,

According to a wireless power transmission system according to an aspect of the present disclosure, the wireless power receiver apparatus includes a signal transmitter circuit that wirelessly is configured to transmit a test signal. The wireless power transmitter apparatus includes a signal receiver circuit that wirelessly receives the test signal, and measures a strength of a received test signal. The wireless power transmission system is configured to change the operating parameters of at least one of the wireless power transmitter apparatus and the wireless power receiver apparatus, so that the strength of the received test signal as the measured value is increased.

With this configuration, the received signal strength of the test signal can be used as a measurement corresponding to the power available by the wireless power receiver apparatus.

According to a wireless power transmission system according to an aspect of the present disclosure, the wireless power transmitter apparatus includes a signal transmitter circuit that wirelessly is configured to transmit a test signal, and the wireless power receiver apparatus includes a signal receiver circuit that wirelessly receives the test signal, and measures a strength of the received test signal. The wireless power transmission system is configured to change the operating parameters of at least one of the wireless power transmitter apparatus and the wireless power receiver apparatus, so that the strength of the received test signal as the measured value is increased.

With this configuration, the received signal strength of the test signal can be used as a measurement corresponding to the power available by the wireless power receiver apparatus.

According to a wireless power transmission system according to an aspect of the present disclosure, the wireless power receiver apparatus includes a load device, and the wireless power transmission system is configured to change the operating parameters of at least one of the wireless power transmitter apparatus and the wireless power receiver apparatus, so that power supplied to the load device as the measured value is increased.

With this configuration, the power supplied to the load device can be used as a measurement corresponding to the power available by the wireless power receiver apparatus.

According to a wireless power transmission system according to an aspect of the present disclosure, the wireless power receiver apparatus includes a load device, the wireless power receiver apparatus acquires the measured value when the load device is off, and turns on the load device when the measured value is equal to or larger than a threshold value.

With this configuration, the sensitivity of the power receiver apparatus can be improved.

According to a wireless power transmission system according to an aspect of the present disclosure, the wireless power receiver apparatus includes a sensor that measures a predetermined physical quantity, and wirelessly is configured to transmit the physical quantity measured by the sensor to the wireless power transmitter apparatus.

With this configuration, for example, it is possible to supply power to each sensor in a sensor network containing multiple sensors.

### EFFECTS OF THE INVENTION

According to the wireless power transmission system according to the aspect of the present disclosure, operating parameters of the wireless power transmitter apparatus or the wireless power receiver apparatus can be adjusted in accordance with a change in the radio wave propagation environment so that power transmission or communication is less likely to be interrupted.

### BRIEF DESCRIPTION OF THE DRAWINGS

FIG. 1 is a schematic view illustrating a configuration of a system including a wireless power transmission system according to an embodiment.
FIG. 2 is a block diagram illustrating a configuration of a power transmitter apparatus 1 of FIG. 1.
FIG. 3 is a block diagram illustrating a configuration of a power receiver apparatus 2 of FIG. 1.
FIG. 4 is a timing chart for explaining an operation of the wireless power transmission system of FIG. 1.
FIG. 5 is a diagram for explaining adaptation according to selection of initial values of operating parameters of the power transmitter apparatus 1 or the power receiver apparatus 2 of FIG. 1.
FIG. 6 is a diagram for explaining adaptation according to on/off of a sensor 23 of the power receiver apparatus 2 of FIG. 1.
FIG. 7 is a schematic view illustrating a configuration of a power receiver apparatus 2A of a wireless power transmission system according to a first modified embodiment.
FIG. 8 is a schematic view illustrating a configuration of a power transmitter apparatus 1B of a wireless power transmission system according to a second modified embodiment.
FIG. 9 is a schematic view illustrating a configuration of a power receiver apparatus 2B of the wireless power transmission system according to the second modified embodiment.

### MODE FOR CARRYING OUT THE INVENTION

Embodiments according to one aspect of the present disclosure (hereinafter, also referred to as "the present embodiment") will be described with reference to the drawings. In the drawings, same reference numerals indicate similar constituent elements.

### APPLICATION EXAMPLE

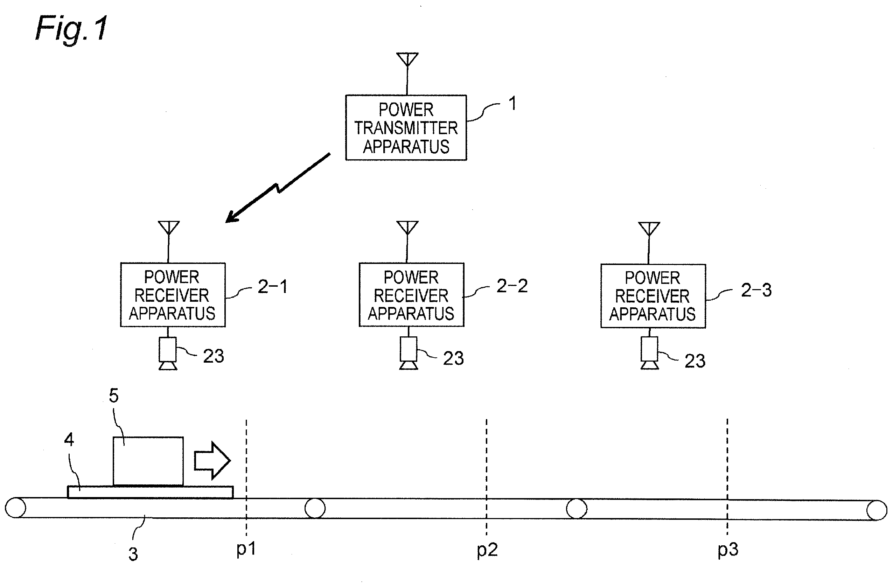

FIG. 1 is a schematic view illustrating a configuration of a system including a wireless power transmission system according to the embodiment. The wireless power transmission system of FIG. 1 includes a power transmitter apparatus 1 and power receiver apparatuses 2-1 to 2-3, and power is wirelessly transmitted from the power transmitter apparatus 1 to the power receiver apparatuses 2-1 to 2-3.

Hereinafter, the power receiver apparatuses 2-1 to 2-3 are also collectively referred to as a "power receiver apparatus 2". Hereinafter, the power transmitter apparatus 1 is also referred to as a "wireless power transmitter apparatus", and the power receiver apparatus 2 are also referred to as a "wireless power receiver apparatus".

In the example of FIG. 1, the power transmitter apparatus 1 and the power receiver apparatuses 2-1 to 2-3 are provided in a factory or warehouse equipped with a belt conveyor 3 for transporting a pallet 4 and a workpiece 5. The pallet 4 and the workpiece 5 are transported by the belt conveyor 3 so as to arrive at predetermined positions p1 to p3 at predetermined times. At the positions p1 to p3, predetermined work events (for example, machining steps such as welding) are executed on the workpiece 5. The power receiver apparatuses 2-1 to 2-3 are provided in the vicinity of the positions p1 to p3, respectively, and are associated with the events executed at the positions p1 to p3, respectively. Each of the power receiver apparatuses 2 includes a sensor 23 that measures a predetermined physical quantity associated with the event.

At least one of the power transmitter apparatus 1 and the power receiver apparatus 2 has variable operating parameters. By changing the operating parameters, a measured value corresponding to power transmitted from the power transmitter apparatus 1 to the power receiver apparatus 2 and made available to the power receiver apparatus 2 is changed. The wireless power transmission system of FIG. 1 changes operating parameters of at least one of the power transmitter apparatus 1 and the power receiver apparatus 2, so that a measured value corresponding to power available to the power receiver apparatus 2 is increased in response to a trigger indicating occurrence of an event associated with the power receiver apparatus 2.

The event associated with the power receiver apparatus 2 may be executed at a predetermined time (at a certain moment or for a certain time interval). In this case, the trigger indicating occurrence of the event associated with the power receiver apparatus 2 is, for example, automatically generated by at least one of the power transmitter apparatus 1 and the power receiver apparatus 2 in advance, by a predetermined time length, from the event associated with the power receiver apparatus 2 executed at a predetermined time. As a result, the wireless power transmission system of FIG. 1 changes operating parameters of at least one of the power transmitter apparatus 1 and the power receiver apparatus 2, so that a measured value corresponding to power available to the power receiver apparatus 2 is increased in advance, by the predetermined time length from the event associated with the power receiver apparatus 2 executed at the predetermined time.

The wireless power transmission system according to the embodiment can follow a change in radio wave propagation environment so that power transmission or communication is less likely to be interrupted by adjusting the operating parameters of the power transmitter apparatus 1 or the power receiver apparatus 2 immediately before the event associated with the power receiver apparatus 2.

### [Configuration example]

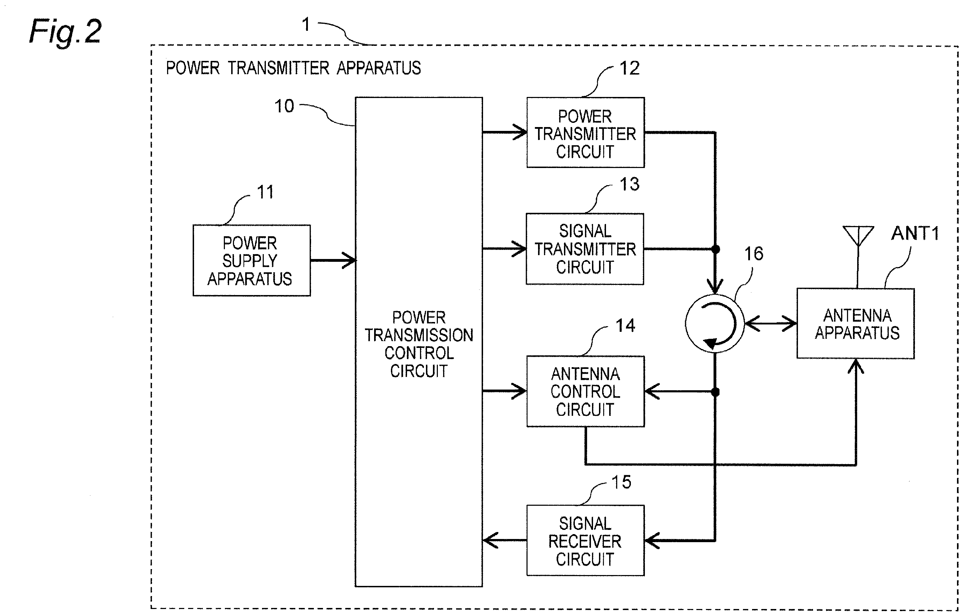

FIG. 2 is a block diagram illustrating a configuration of the power transmitter apparatus 1 of FIG. 1. The power transmitter apparatus 1 includes a power transmission control circuit 10, a power supply apparatus 11, a power transmitter circuit 12, a signal transmitter circuit 13, an antenna control circuit 14, a signal receiver circuit 15, a circulator 16, and an antenna apparatus ANT1.

The power transmission control circuit 10 controls overall operation of the power transmitter apparatus 1.

The power supply apparatus 11 supplies power to be transmitted to the power receiver apparatus 2.

The power transmitter circuit 12 transmits power to the power receiver apparatus 2.

The signal transmitter circuit 13 transmits a radio signal to the power receiver apparatus 2. The signal receiver circuit 15 receives a radio signal from the power receiver apparatus 2.

The antenna apparatus ANT1 has a variable directivity. The antenna apparatus ANT1 is, for example, an array antenna including a plurality of antenna elements, and the directivity thereof is changed by individually adjusting amplitudes and phases of signals transmitted and received by the antenna elements. The antenna control circuit 14 controls the directivity of the antenna apparatus ANT1 under the control of the power transmission control circuit 10.

The circulator 16 combines (synthesizes) and separates power and a signal transmitted to the power receiver apparatus 2 via the antenna apparatus ANT1 and a signal received from the power receiver apparatus 2 via the antenna apparatus ANT1.

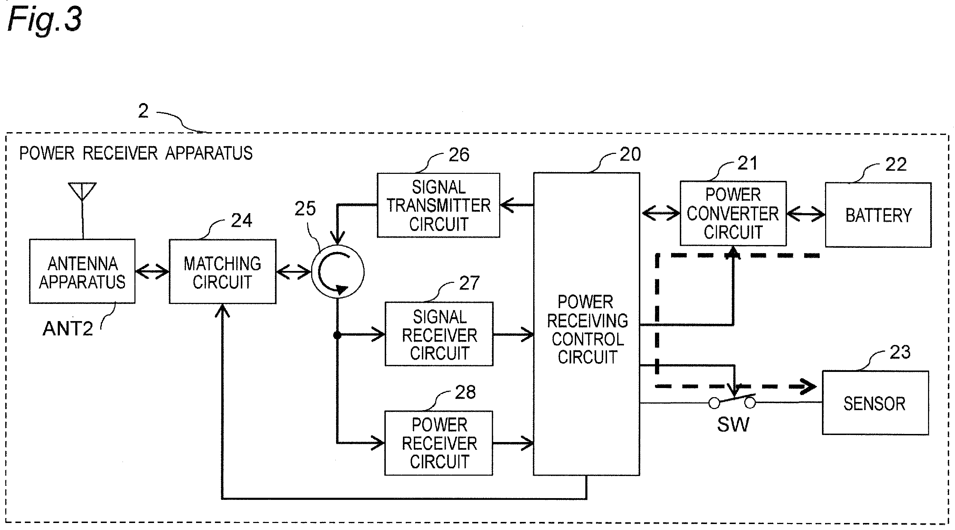

FIG. 3 is a block diagram illustrating a configuration of the power receiver apparatus 2 of FIG. 1. The power receiver apparatus 2 includes a Power receiving control circuit 20, a power converter circuit 21, a battery 22, a sensor 23, a matching circuit 24, a circulator 25, a signal transmitter circuit 26, a signal receiver circuit 27, a power receiver circuit 28, an antenna apparatus ANT2, and a switch SW.

The Power receiving control circuit 20 controls overall operation of the power receiver apparatus 2.

The antenna apparatus ANT2 has a predetermined directivity or omni-directivity.

The matching circuit 24 has variable impedance under control of the Power receiving control circuit 20.

The circulator 25 combines (synthesizes) and separates power and a signal transmitted from the power transmitter apparatus 1 via the antenna apparatus ANT2 and a signal transmitted to the power transmitter apparatus 1 via the antenna apparatus ANT2.

The signal transmitter circuit 26 transmits a radio signal to the power transmitter apparatus 1. The signal receiver circuit 27 receives a radio signal from the power transmitter apparatus 1.

The power receiver circuit 28 receives power from the power transmitter apparatus 1.

The power converter circuit 21 steps up or down power transmitted from the power transmitter apparatus 1 with a variable voltage under control of the Power receiving control circuit 20. The battery 22 stores power transmitted from the power transmitter apparatus 1 and stepped up or down by the power converter circuit 21.

The sensor 23 measures a predetermined physical quantity. The sensor 23 is connected to the Power receiving control circuit 20 with a switch SW interposed therebetween that turns on/off under control of the Power receiving control circuit 20. When the switch SW is on, power is supplied from the battery 22 to the sensor 23, and a physical quantity measured by the sensor 232 is transmitted to the Power receiving control circuit 20. The physical quantity measured by the sensor 23 is wirelessly transmitted to the power transmitter apparatus 1.

By changing, as operating parameters, at least one of the directional pattern of the antenna apparatus ANT1, the impedance of the matching circuit 24, and a step-up ratio or step-down ratio of the power converter circuit 21, a measured value corresponding to power transmitted from the power transmitter apparatus 1 to the power receiver apparatus 2 and made available to the power receiver apparatus 2 is changed.

In order to estimate the measured value corresponding to the power available to the power receiver apparatus 2, the signal transmitter circuit 26 of the power receiver apparatus 2 may wirelessly transmit a test signal and the signal receiver circuit 15 of the power transmitter apparatus 1 may measure a strength of the received test signal. The signal receiver circuit 15 of the power transmitter apparatus 1 may measure the strength of the received test signal as it is or may measure the strength of the received test signal after amplifying the test signal or may measure power of the test signal instead of the strength of the received test signal. In this case, the wireless power transmission system changes operating parameters of at least one of the power transmitter apparatus 1 and the power receiver apparatus 2, so that the strength of the received test signal as a measured value corresponding to the power available to the power receiver apparatus 2 is increased.

The signal transmitter circuit 13 of the power transmitter apparatus 1 may wirelessly transmit a test signal and the signal receiver circuit 27 of the power receiver apparatus 2 may wirelessly receive the test signal, and measure a strength of the received test signal. The signal receiver circuit 27 of the power receiver apparatus 2 may measure the strength of the received test signal as it is or may measure the strength of the received test signal after amplifying the test signal or may measure power of the test signal instead of the strength of the received test signal. Also in this case, the wireless power transmission system changes operating parameters of at least one of the power transmitter apparatus 1 and the power receiver apparatus 2 so that the strength of the received test signal as a measured value corresponding to power available to the power receiver apparatus 2 is increased.

The test signal may be a communication signal having a predetermined format or may be a continuous wave (CW). The test signal may be transmitted in response to a command signal generated by the power transmitter apparatus 1 or the power receiver apparatus 2 or may be transmitted regularly without a command signal.

The electric power supplied to a load device of the power receiver apparatus 2, for example, the power converter circuit 21, the battery 22, or the sensor 23 may be measured in order to estimate the measured value corresponding to the power available to the power receiver apparatus 2. In this case, the wireless power transmission system changes operating parameters of at least one of the power transmitter apparatus 1 and the power receiver apparatus 2 so that power supplied to the load device as a measured value corresponding to power available to the power receiver apparatus 2 is increased.

### OPERATION EXAMPLE

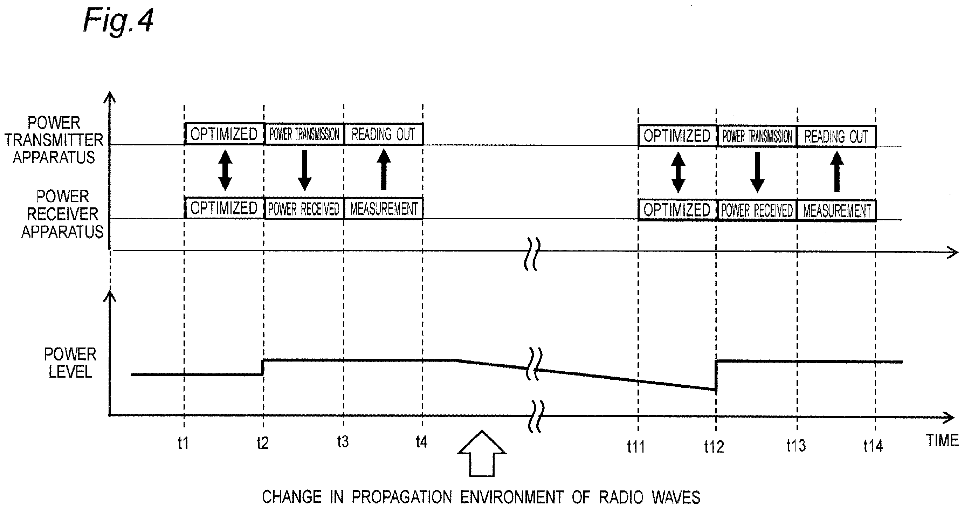

FIG. 4 is a timing chart for explaining operation of the wireless power transmission system of FIG. 1.

When the pallet 4 and the workpiece 5 are not in the vicinity of the positions p 1 to p3, the sensor 23 does not measure a physical quantity associated with an event for the workpiece 5. Therefore, in this case, power transmission from the power transmitter apparatus to the power receiver apparatus 2 is unnecessary, and communication between the power transmitter apparatus 1 and the power receiver apparatus 2 is unnecessary. On the other hand, when the pallet 4 and the workpiece 5 are in the vicinity of any of the positions p1 to p3, electric power is transmitted from the power transmitter apparatus to the power receiver apparatus 2, the sensor 23 measures a physical quantity associated with the event for the workpiece 5, and the power receiver apparatus 2 transmits the physical quantity measured by the sensor 23 to the power transmitter apparatus 1. Therefore, the wireless power transmission system of FIG. 1 changes operating parameters of at least one of the power transmitter apparatus 1 and the power receiver apparatus 2, so that a measured value corresponding to power available to the power receiver apparatus 2 is increased in advance, by a predetermined time length from the event for the workpiece 5.

In the example of FIG. 4, the pallet 4 and the workpiece 5 are transported by the belt conveyor 3 so as to arrive, for example, at the position p1 of FIG. 1 at a time t3.

At a time t1, which is in advance, by a predetermined time length from the event for workpiece 5 executed at the time t3, operating parameters of the power transmitter apparatus 1 or the power receiver apparatus 2 are adjusted (adapted) in accordance with a change in the radio wave propagation environment. For example, the power transmitter apparatus 1 starts adaptation of the operating parameters in response to a control signal from an external device, and a test signal or the like is transmitted and received between the power transmitter apparatus 1 and the power receiver apparatus 2. The time t1 is in advance of the time t3, for example, by tens of milliseconds to several seconds. The adaptation may be started from any initial values or may be started from operating parameters set in a previous period. The initial values of the operating parameters may be, for example, learned (by teaching) in advance about the radio wave propagation environment of the wireless power transmission system so that power available to the power receiver apparatus 2 is maximized or optimized. The adaptation may be started from such initial values learned in advance. As a result, the wireless power transmission system can be operated more stably than when the adaptation is started from any initial values.

When the adaptation of the operating parameters is completed at a time t2, the power transmitter apparatus 1 transmits power by transmitting a continuous wave (CW) wave to the power receiver apparatus 2. The power transmitter apparatus 1 may start power transmission with maximum power available.

When the electric power sufficient for operation of the power receiver apparatus 2 is supplied for a time interval from the time t2 to the time t3, the power receiver apparatus 2 measures a physical quantity associated with the event for the workpiece 5 by using the sensor 23, and the power transmitter apparatus 1 reads out the physical quantity measured by the sensor 23 from the power receiver apparatus 2.

When the reading of the physical quantity measured by the sensor 23 is completed at a time t4, the communication between the power transmitter apparatus 1 and the power receiver apparatus 2 is finished.

In the example of FIG. 4, the pallet 4 and the workpiece 5 are transported by the belt conveyor 3 so as to arrive, for example, at the position p1 of FIG. 1 again at a time t13. Even at the same position p1, the radio wave propagation environment may change between the time t3 and the time t13, and a measured value corresponding to power available to the power receiver apparatus 2 may change. Therefore, at times t11 to t14, the adaptation of operating parameters, the power transmission, and the measurement and reading of the physical quantity are executed again as in the case of the times t1 to t4.

When the wireless power transmission system is first installed in a factory or warehouse, for example, the following operations are performed.

In the factory or warehouse, one power transmitter apparatus 1 and a plurality of power receiver apparatuses 2 are installed. The power transmitter apparatus 1 is disposed so as to face (oppose) a center of positions of the plurality of power receiver apparatuses 2. Identification information of each of the power receiver apparatuses 2 is registered in the power transmitter apparatus 1. Each of the power receiver apparatuses 2 is attached to a jig. When the antenna apparatus ANT2 of each of the power receiver apparatuses 2 has directivity, each of the power receiver apparatuses 2 is disposed so that a beam of the antenna apparatus ANT2 is directed toward the power transmitter apparatus 1.

Next, the power transmitter apparatus 1 and the power receiver apparatus 2 are operated with the workpiece 5 fixed assuming the start and end of the welding process in order to confirm that the power transmitter apparatus 1 can read a physical quantity measured by the sensor 23 from the power receiver apparatus 2. At this point, the directivity of the antenna apparatus ANT1 of the power transmitter apparatus 1 is not controlled. The operations of the power transmitter apparatus 1 and the power receiver apparatus 2 are confirmed at this point so that whether the power receiver apparatus 2 is out of the coverage of the radio waves or the power transmitter apparatus 1 or the power receiver apparatus 2 is out of order can be distinguished when a measured value corresponding to power available to the power receiver apparatus 2 is insufficient in a later test operation.

Next, the workpiece 5 is moved to a seating position, the directivity of the antenna apparatus ANT1 of the power transmitter apparatus 1 is controlled, and whether a measured value corresponding to power available to the power receiver apparatus 2 is equal to or larger than a predetermined threshold value is checked. When the measured value corresponding to the power available to the power receiver apparatus 2 is equal to or larger than the threshold value, the power transmitter apparatus 1 can read a physical quantity measured by the sensor 23 from the power receiver apparatus 2. If the measured value corresponding to the power available to the power receiver apparatus 2 is equal to or larger than the threshold value, a weighting condition of the power receiver apparatus 2 is taught, and if not, the position of the antenna apparatus ANT2 of the power receiver apparatus 2 is adjusted.

Next, whether or not the workpiece 5 can be detected by the sensor 23 is checked. When the workpiece 5 can be detected by the sensor 23, the workpiece 5 is moved to the seating position, the directivity of the antenna apparatus ANT1 of the power transmitter apparatus 1 is controlled, and whether or not a measured value corresponding to power available to the power receiver apparatus 2 is equal to or larger than a threshold value is checked. If the measured value corresponding to the power available to the power receiver apparatus 2 is equal to or larger than the threshold value, a weighting condition of the power receiver apparatus 2 is taught, and if not, the position of the antenna apparatus ANT2 of the power receiver apparatus 2 is adjusted. Furthermore, the power transmitter apparatus 1 and the power receiver apparatus 2 are operated with the workpiece 5 fixed assuming the start and end of the welding process, the directivity of the antenna apparatus ANT1 of the power transmitter apparatus 1 is controlled, and whether or not a measured value corresponding to power available to the power receiver apparatus 2 is equal to or larger than a threshold value is checked. If the measured value corresponding to the power available to the power receiver apparatus 2 is equal to or larger than the threshold value, a weighting condition of the power receiver apparatus 2 is taught, and if not, the position of the antenna apparatus ANT2 of the power receiver apparatus 2 is adjusted.

On the other hand, when the workpiece 5 cannot be detected by the sensor 23, the position of the sensor 23 of the power receiver apparatus 2 is finely adjusted so that the workpiece 5 can be detected and the workpiece 5 is unlikely to collide.

When the wireless power transmission system is actually operated in a factory or warehouse, for example, the following operations are performed.

For example, the workpiece 5 is carried into a welding process and the workpiece 5 is installed on a jig. The power receiver apparatus 2 transmits an installation completion trigger indicating completion of installation of the workpiece 5 to the power transmitter apparatus 1.

After detecting the installation completion trigger, the power transmitter apparatus 1 detects seating of the workpiece 5. When all the power receiver apparatuses 2 detect seating of the workpiece 5, a seating completion trigger is transmitted to the welding process, and the welding process is performed. When any of the power receiver apparatuses 2 detects failure of seating of the workpiece 5, a worker visually checks a seating state of the workpiece 5. When a communication error occurs in any of the power receiver apparatuses 2, maintenance work is executed. It is unnecessary to detect the seating of the workpiece 5 before the installation completion trigger. It is unnecessary to continue detection of the seating of the workpiece 5 after the seating completion trigger. It is assumed that an area within 2 m to 3 m around the workpiece 5 is in a static state within one second after the detection of the seating of the workpiece 5. However, there is a possibility that another process is being executed at a place more than 2 m to 3 m away from the workpiece 5.

When the seating of the workpiece 5 is confirmed, welding is started, and when the welding is completed, the workpiece 5 is carried out to a next process.

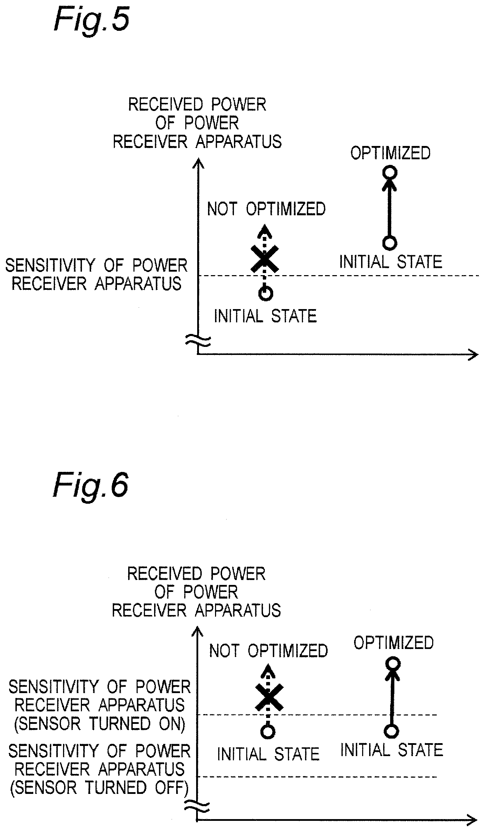

FIG. 5 is a diagram for explaining adaptation according to selection of initial values of operating parameters of the power transmitter apparatus 1 or the power receiver apparatus 2 of FIG. 1. The adaptation of the operating parameters of the power transmitter apparatus 1 (directivity of the antenna apparatus ANT1) is performed based on a test signal returned from the power receiver apparatus 2 to the power transmitter apparatus 1 in response to a request signal transmitted from the power transmitter apparatus 1 to the power receiver apparatus 2. Therefore, if power received by the power receiver apparatus 2 is smaller than sensitivity (for example, -7.5 dBm) of the power receiver apparatus 2 when the initial values of the operating parameters are set, the power receiver apparatus 2 cannot receive a request signal, and therefore cannot transmit a test signal. As a result, the operating parameters cannot be adapted. Therefore, initial weight teaching of the antenna apparatus ANT1 is executed in advance in accordance with a surrounding radio wave propagation environment, and the operating parameters are adapted by using the initial weight of the antenna apparatus ANT1 obtained after the teaching. This makes it more likely that power received by the power receiver apparatus 2 is larger than the sensitivity of the power receiver apparatus 2. As a result, the operating parameters can be adapted based on the test signal returned from the power receiver apparatus 2 to the power transmitter apparatus 1.

FIG. 6 is a diagram for explaining adaptation according to on/off of the sensor 23 of the power receiver apparatus 2 of FIG. 1. Even when the operating parameters are adapted by using the initial weight of the antenna apparatus ANT1 obtained after the teaching, power received by the power receiver apparatus 2 is sometimes lower than the sensitivity of the power receiver apparatus 2. Therefore, the power receiver apparatus 2 acquires a measured value when the sensor 23 is off by using the switch SW, and turns on the sensor 23 when the measured value corresponding to power available to the power receiver apparatus 2 is equal to or higher than a threshold value. This makes it more likely that power received by the power receiver apparatus 2 is larger than the sensitivity of the power receiver apparatus 2. As a result, the operating parameters can be adapted based on the test signal returned from the power receiver apparatus 2 to the power transmitter apparatus 1.

### [Effects]

As described above, the wireless power transmission system according to the embodiment can follow a change in radio wave propagation environment so that power transmission or communication is less likely to be interrupted by adjusting operating parameters of the power transmitter apparatus 1 or the power receiver apparatus 2 immediately before an event associated with the power receiver apparatus 2.

Since the operating parameters of the power transmitter apparatus 1 or the power receiver apparatus 2 follow a change in the radio wave propagation environment, power can be wirelessly transmitted from the power transmitter apparatus 1 to the power receiver apparatus 2 with high efficiency.

For example, even when a plurality of sensors are disposed at a plurality of different positions in a factory or a warehouse, the power transmission or the communication is less likely to be interrupted regardless of the position of the power receiver apparatus 2 and regardless of a time interval when the power transmission or the communication is performed.

### MODIFIED EMBODIMENTS

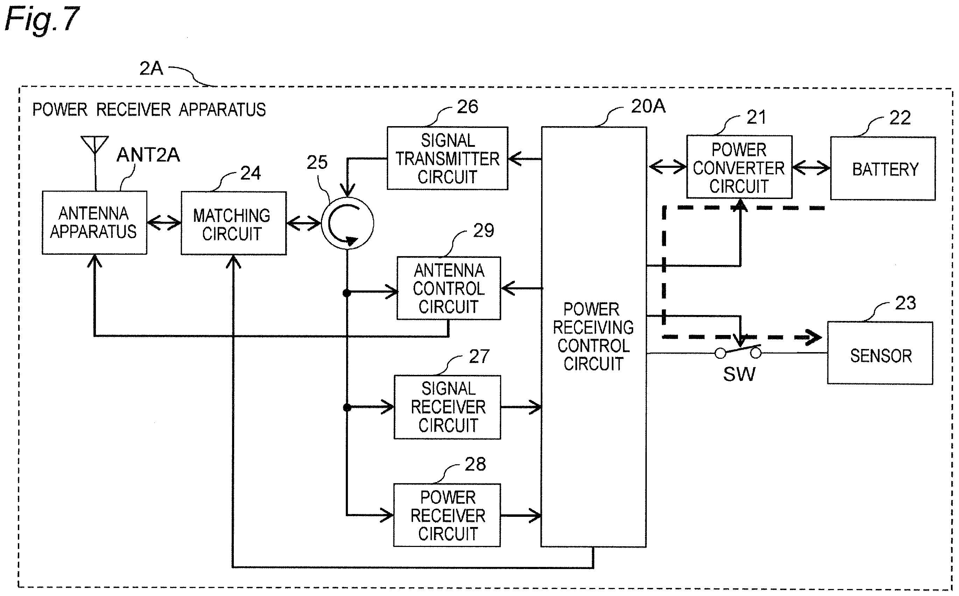

FIG. 7 is a schematic view illustrating a configuration of a power receiver apparatus 2A of a wireless power transmission system according to a first modified embodiment. The power receiver apparatus 2A includes an antenna apparatus ANT2A and a Power receiving control circuit 20A instead of the antenna apparatus ANT2 and the Power receiving control circuit 20 of FIG. 3. The power receiver apparatus 2A further includes an antenna control circuit 29. The antenna apparatus ANT2A has a variable directivity. The antenna control circuit 29 controls the directivity of the antenna apparatus ANT2A under control of the Power receiving control circuit 20A.

A directivity pattern of the antenna apparatus ANT2A may be changed as operating parameters of the power receiver apparatus 2A. As a result, a measured value corresponding to power transmitted from the power transmitter apparatus 1 to the power receiver apparatus 2A and made available to the power receiver apparatus 2A changes.

When the power receiver apparatus includes an antenna apparatus having variable directivity, the power transmitter apparatus may include an antenna apparatus having predetermined directivity or omni-directivity.

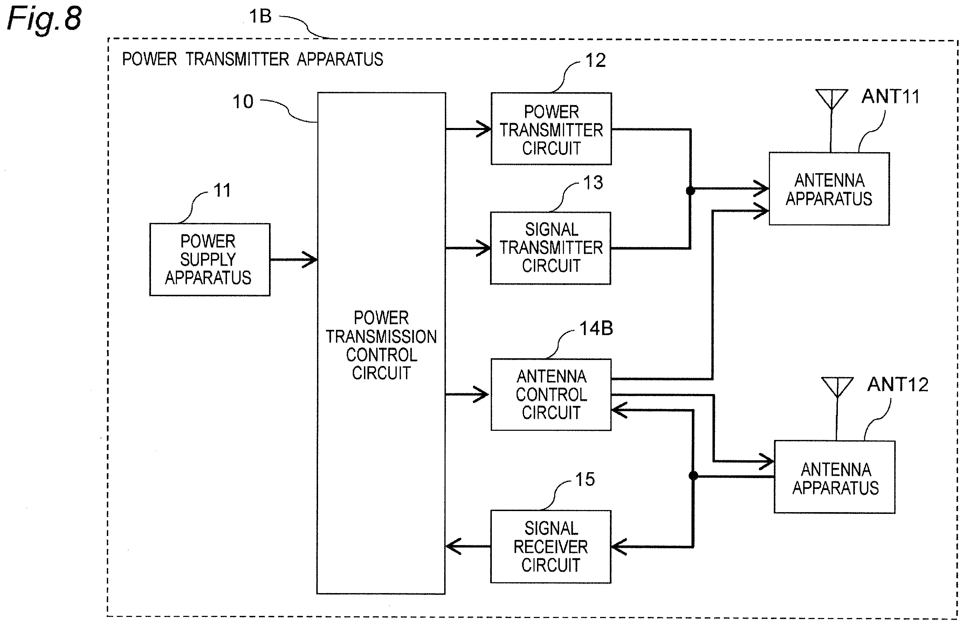

FIG. 8 is a schematic view illustrating a configuration of a power transmitter apparatus 1B of a wireless power transmission system according to a second modified embodiment. The power transmitter apparatus 1B includes antenna apparatuses ANT11 and ANT12 and an antenna control circuit 14B instead of the antenna apparatus ANT1, the antenna control circuit 14, and the circulator 16 of FIG. 2. The separate antenna apparatuses ANT11 and ANT12 may be used instead of using the single antenna apparatus ANT1 for both transmission and reception. The antenna control circuit 14B controls directivity of the antenna apparatuses ANT11 and ANT12 under control of the power transmission control circuit 10.

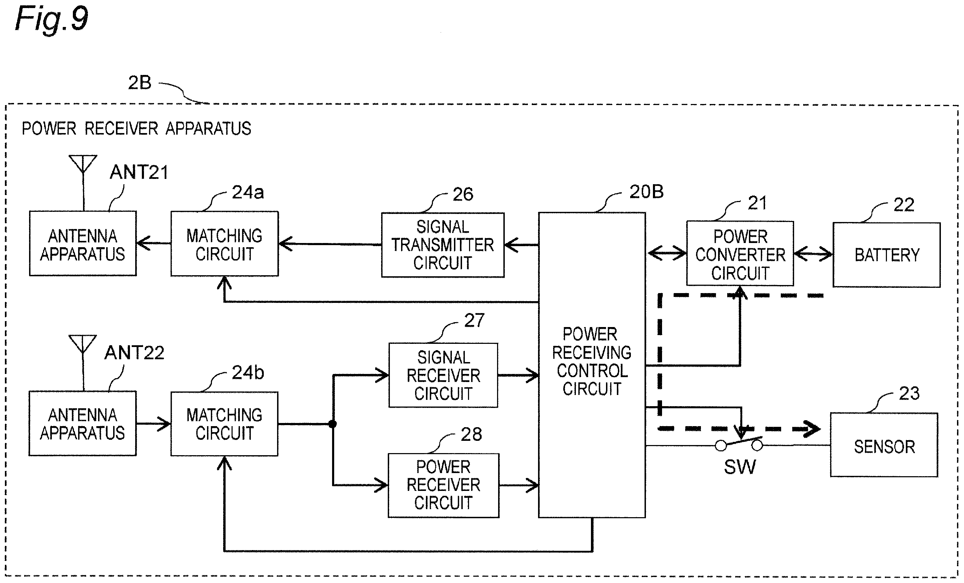

FIG. 9 is a schematic view illustrating a configuration of a power receiver apparatus 2B of the wireless power transmission system according to the second modified embodiment. The power receiver apparatus 2B includes antenna apparatuses ANT21 and ANT22, a Power receiving control circuit 20B, and matching circuits 24a and 24b instead of the antenna apparatus ANT2, the Power receiving control circuit 20, and the matching circuit 24 of FIG. 3. The separate antenna apparatuses ANT21 and ANT22 may be used instead of using the single antenna apparatus ANT2 for both transmission and reception. The matching circuits 24a and 24b have variable impedance under control of the Power receiving control circuit 20B.

The power transmitter apparatus 1 of FIG. 2, the power receiver apparatus 2 of FIG. 3, the power receiver apparatus 2A of FIG. 7, the power transmitter apparatus 1B of FIG. 8, and the power receiver apparatus 2B of FIG. 9 may be combined in any way.

The power receiver apparatus 2B of FIG. 9 may also include two antenna apparatuses each having variable directivity.

The power receiver apparatus 2 etc. may include any other load device instead of the sensor 23 or in addition to the sensor 23. The other load device may be, for example, a lighting device, a switch or a relay that controls other devices, or a signal processing circuit that outputs a signal to other devices. In this case, the power receiver apparatus may control the other load device by using a detection result of the sensor 23 as a trigger.

### INDUSTRIAL APPLICABILITY

The wireless power transmission system according to the aspect of the present disclosure can be, for example, used to supply power to each sensor in a sensor network including a plurality of sensors.

### REFERENCE SIGNS LIST

- 1 and 1B: Power transmitter apparatus
- 2, 2A, 2B, and 2-1 to 2-3: Power receiver apparatus
- 3: Belt conveyor
- 4: Pallet
- 5: Workpiece
- 10: Power transmission control circuit
- 11: Power supply apparatus
- 12: Power transmitter circuit
- 13: Signal transmitter circuit
- 14: Antenna control circuit
- 15: Signal receiver circuit
- 16: Circulator
- 20, 20A, and 20B: Power receiving control circuit
- 21: Power converter circuit
- 22: Battery
- 23: Sensor
- 24: Matching circuit
- 25: Circulator
- 26: Signal transmitter circuit
- 27: Signal receiver circuit
- 28: Power receiver circuit
- 29: Antenna control circuit
- ANT1, ANT2, ANT2A, and ANT11 to ANT22: Antenna apparatus
- SW: Switch

## Claims

1. A wireless power transmission system comprising:
a wireless power transmitter apparatus (1, 1B); and
at least one wireless power receiver apparatus (2, 2A, 2B, 2-1 to 2-3),
wherein the wireless power transmission system is configured to wirelessly transmit power from the wireless power transmitter apparatus (1, 1B) to the wireless power receiver apparatus (2, 2A, 2B, 2-1 to 2-3), and
wherein the wireless power transmission system is configured to change operating parameters of at least one of the wireless power transmitter apparatus (1, 1B) and the wireless power receiver apparatus (2, 2A, 2B, 2-1 to 2-3), so that a measured value corresponding to power transmitted from the wireless power transmitter apparatus (1, 1B) to the wireless power receiver apparatus (2, 2A, 2B, 2-1 to 2-3) and made available to the wireless power receiver apparatus (2, 2A, 2B, 2-1 to 2-3) is increased in response to a trigger indicative of occurrence of a predetermined triggering event,
**characterized in that**
the operating parameters of at least one of the wireless power transmitter apparatus (1, 1B) and the wireless power receiver apparatus (2, 2A, 2B, 2-1 to 2-3) are changed so that the measured value corresponding to the power transmitted from the wireless power transmitter apparatus (1, 1B) to the wireless power receiver apparatus (2, 2A, 2B, 2-1 to 2-3) and made available to the wireless power receiver apparatus (2, 2A, 2B, 2-1 to 2-3) is increased in advance, by a predetermined time length from the predetermined triggering event that is executed at a predetermined time.

2. The wireless power transmission system as claimed in claim 1,
wherein the operating parameters of at least one of the wireless power transmitter apparatus (1, 1B) and the wireless power receiver apparatus are changed from initial values learned in advance so as to maximize or optimize the power available by the wireless power receiver apparatus (2, 2A, 2B, 2-1 to 2-3).

3. The wireless power transmission system as claimed in claim 1 or 2,
wherein the wireless power transmitter apparatus (1, 1B) includes an antenna apparatus (ANT1) that has a variable directivity pattern; and
wherein the operating parameters include the variable directivity pattern of the antenna apparatus (ANT1).

4. The wireless power transmission system as claimed in claim 1 or 2,
wherein the wireless power receiver apparatus (2, 2A, 2B, 2-1 to 2-3) includes an antenna apparatus (ANT2A) that has a variable directivity pattern; and
wherein the operating parameters include the variable directivity pattern of the antenna apparatus (ANT2A).

5. The wireless power transmission system as claimed in claim 1 or 2,
wherein the wireless power receiver apparatus (2, 2A, 2B, 2-1 to 2-3) includes a matching circuit (24) that has variable impedance; and
wherein the operating parameters include the variable impedance of the matching circuit (24).

6. The wireless power transmission system as claimed in claim 1 or 2,
wherein the wireless power receiver apparatus (2, 2A, 2B, 2-1 to 2-3) includes a power converter circuit (21) that has variable step-up ratio and step-down ratio; and
wherein the operating parameters include the variable step-up ratio and the step-down ratio of the power converter circuit (21).

7. The wireless power transmission system as claimed in any one of claims 1 to 6,
wherein the wireless power receiver apparatus (2, 2A, 2B, 2-1 to 2-3) includes a signal transmitter circuit (26) that is configured to wirelessly transmit a test signal;
wherein the wireless power transmitter apparatus (1, 1B) includes a signal receiver circuit (15) that is configured to wirelessly receive the test signal, and measure a strength of a received test signal; and
wherein the wireless power transmission system is configured to change the operating parameters of at least one of the wireless power transmitter apparatus (1, 1B) and the wireless power receiver apparatus (2, 2A, 2B, 2-1 to 2-3), so that the strength of the received test signal as the measured value is increased.

8. The wireless power transmission system as claimed in any one of claims 1 to 6,
wherein the wireless power transmitter apparatus (1, 1B) includes a signal transmitter circuit (13) that is configured to wirelessly transmit a test signal;
wherein the wireless power receiver apparatus (2, 2A, 2B, 2-1 to 2-3) includes a signal receiver circuit (27) that is configured to wirelessly receive the test signal, and measure a strength of the received test signal; and
wherein the wireless power transmission system is configured to change the operating parameters of at least one of the wireless power transmitter apparatus (1, 1B) and the wireless power receiver apparatus (2, 2A, 2B, 2-1 to 2-3), so that the strength of the received test signal as the measured value is increased.

9. The wireless power transmission system as claimed in any one of claims 1 to 8,
wherein the wireless power receiver apparatus (2, 2A, 2B, 2-1 to 2-3) includes a load device; and
wherein the wireless power transmission system is configured to change the operating parameters of at least one of the wireless power transmitter apparatus (1, 1B) and the wireless power receiver apparatus (2, 2A, 2B, 2-1 to 2-3), so that power supplied to the load device as the measured value is increased.

10. The wireless power transmission system as claimed in any one of claims 1 to 8,
wherein the wireless power receiver apparatus (2, 2A, 2B, 2-1 to 2-3) includes a load device; and
wherein the wireless power receiver apparatus (2, 2A, 2B, 2-1 to 2-3) is configured to acquire the measured value when the load device is off, and turn on the load device when the measured value is equal to or larger than a threshold value.

11. The wireless power transmission system as claimed in any one of claims 1 to 10,
wherein the wireless power receiver apparatus (2, 2A, 2B, 2-1 to 2-3) includes a sensor (23) that is configured to measure a predetermined physical quantity, and is configured to wirelessly transmit the physical quantity measured by the sensor (23) to the wireless power transmitter apparatus (1, 1B).

## Patentansprüche

1. Drahtloses Stromübertragungssystem, umfassend:
eine drahtlose Stromsendervorrichtung (1, 1B); und
mindestens eine drahtlose Stromempfängervorrichtung (2, 2A, 2B, 2-1 bis 2-3),
wobei das drahtlose Stromübertragungssystem konfiguriert ist, um Strom drahtlos von der drahtlosen Stromsendervorrichtung (1, 1B) zu der drahtlosen Stromempfängervorrichtung (2, 2A, 2B, 2-1 bis 2-3) zu übertragen, und
wobei das drahtlose Stromübertragungssystem konfiguriert ist, um Betriebsparameter von mindestens einer von der drahtlosen Stromsendervorrichtung (1, 1B) und der drahtlosen Stromempfängervorrichtung (2, 2A, 2B, 2-1 bis 2-3) zu ändern, so dass ein gemessener Wert, der dem Strom entspricht, der von der drahtlosen Stromsendervorrichtung (1, 1B) zu der drahtlosen Stromempfängervorrichtung (2, 2A, 2B, 2-1 bis 2-3) übertragen und der drahtlosen Stromempfängervorrichtung (2, 2A, 2B, 2-1 bis 2-3) zur Verfügung gestellt wird, als Reaktion auf einen Auslöser erhöht wird, der für das Auftreten eines vorbestimmten Auslöserereignisses bezeichnend ist,
**dadurch gekennzeichnet, dass**
die Betriebsparameter von mindestens einer von der drahtlosen Stromsendervorrichtung (1, 1B) und der drahtlosen Stromempfängervorrichtung (2, 2A, 2B, 2-1 bis 2-3) geändert werden, so dass der gemessene Wert, der dem Strom entspricht, der von der drahtlosen Stromsendervorrichtung (1, 1B) zu der drahtlosen Stromempfängervorrichtung (2, 2A, 2B, 2-1 bis 2-3) übertragen und der drahtlosen Stromempfängervorrichtung (2, 2A, 2B, 2-1 bis 2-3) zur Verfügung gestellt wird, vorab um eine bestimmte Zeitdauer vom vorbestimmten Auslöserereignis erhöht, das zu einer bestimmten Zeit ausgeführt wird.

2. Drahtloses Stromübertragungssystem nach Anspruch 1,
wobei die Betriebsparameter von mindestens einer von der drahtlosen Stromsendervorrichtung (1, 1B) und der drahtlosen Stromempfängervorrichtung von vorab erlernten Anfangswerten geändert werden, um den von der drahtlosen Stromempfängervorrichtung (2, 2A, 2B, 2-1 bis 2-3) verfügbaren Strom zu maximieren oder zu optimieren.

3. Drahtloses Stromübertragungssystem nach Anspruch 1 oder 2,
wobei die drahtlose Stromsendervorrichtung (1, 1B) eine Antennenvorrichtung (ANT1) beinhaltet, die eine variable Richtcharakteristik aufweist; und
wobei die Betriebsparameter die variable Richtcharakteristik der Antennenvorrichtung (ANT1) beinhalten.

4. Drahtloses Stromübertragungssystem nach Anspruch 1 oder 2,
wobei die drahtlose Stromempfängervorrichtung (2, 2A, 2B, 2-1 bis 2-3) eine Antennenvorrichtung (ANT2A) beinhaltet, die eine variable Richtcharakteristik aufweist; und
wobei die Betriebsparameter die variable Richtcharakteristik der Antennenvorrichtung (ANT2A) beinhalten.

5. Drahtloses Stromübertragungssystem nach Anspruch 1 oder 2,
wobei die drahtlose Stromempfängervorrichtung (2, 2A, 2B, 2-1 bis 2-3) eine Anpassungsschaltung (24) beinhaltet, die eine variable Impedanz aufweist; und
wobei die Betriebsparameter die variable Impedanz der Anpassungsschaltung (24) beinhalten.

6. Drahtloses Stromübertragungssystem nach Anspruch 1 oder 2,
wobei die drahtlose Stromempfängervorrichtung (2, 2A, 2B, 2-1 bis 2-3) eine Stromwandlerschaltung (21) beinhaltet, die ein variables Aufwärtsverhältnis und Abwärtsverhältnis aufweist; und
wobei die Betriebsparameter das variable Aufwärtsverhältnis und das Abwärtsverhältnis der Stromwandlerschaltung (21) beinhalten.

7. Drahtloses Stromübertragungssystem nach einem der Ansprüche 1 bis 6,
wobei die drahtlose Stromempfängervorrichtung (2, 2A, 2B, 2-1 bis 2-3) eine Signalsenderschaltung (26) beinhaltet, die konfiguriert ist, um ein Testsignal drahtlos zu senden;
wobei die drahtlose Stromsendervorrichtung (1, 1B) eine Signalempfängerschaltung (15) beinhaltet, die konfiguriert ist, um das Testsignal drahtlos zu empfangen und eine Stärke eines empfangenen Testsignals zu messen; und
wobei das drahtlose Stromübertragungssystem konfiguriert ist, um die Betriebsparameter von mindestens einer von der drahtlosen Stromsendervorrichtung (1, 1B) und der drahtlosen Stromempfängervorrichtung (2, 2A, 2B, 2-1 bis 2-3) zu ändern, so dass die Stärke des empfangenen Testsignals als Messwert erhöht wird.

8. Drahtloses Stromübertragungssystem nach einem der Ansprüche 1 bis 6,
wobei die drahtlose Stromsendervorrichtung (1, 1B) eine Signalsenderschaltung (13) beinhaltet, die konfiguriert ist, um ein Testsignal drahtlos zu senden;
wobei die drahtlose Stromempfängervorrichtung (2, 2A, 2B, 2-1 bis 2-3) eine Signalempfängerschaltung (27) beinhaltet, die konfiguriert ist, um drahtlos
das Testsignal zu empfangen und eine Stärke des empfangenen Testsignals zu messen; und wobei das drahtlose Stromübertragungssystem konfiguriert ist, um die Betriebsparameter von mindestens einer von der drahtlosen Stromsendervorrichtung (1, 1B) und der drahtlosen Stromempfängervorrichtung (2, 2A, 2B, 2-1 bis 2-3) zu ändern, so dass die Stärke des empfangenen Testsignals als Messwert erhöht wird.

9. Drahtloses Stromübertragungssystem nach einem der Ansprüche 1 bis 8,
wobei die drahtlose Stromempfängervorrichtung (2, 2A, 2B, 2-1 bis 2-3) eine Lastvorrichtung beinhaltet; und
wobei das drahtlose Stromübertragungssystem konfiguriert ist, um die Betriebsparameter von mindestens einer von der drahtlosen Stromsendervorrichtung (1, 1B) und der drahtlosen Stromempfängervorrichtung (2, 2A, 2B, 2-1 bis 2-3) zu ändern, so dass der der Lastvorrichtung zugeführte Strom als Messwert erhöht wird.

10. Drahtloses Stromübertragungssystem nach einem der Ansprüche 1 bis 8,
wobei die drahtlose Stromempfängervorrichtung (2, 2A, 2B, 2-1 bis 2-3) eine Lastvorrichtung beinhaltet; und
wobei die drahtlose Stromempfängervorrichtung (2, 2A, 2B, 2-1 bis 2-3) konfiguriert ist, um den gemessenen Wert zu erfassen, wenn die Lastvorrichtung ausgeschaltet ist, und die Lastvorrichtung einzuschalten, wenn der
gemessene Wert gleich oder größer ist als ein Schwellenwert.

11. Drahtloses Stromübertragungssystem nach einem der Ansprüche 1 bis 10,
wobei die drahtlose Stromempfängervorrichtung (2, 2A, 2B, 2-1 bis 2-3) einen Sensor (23) beinhaltet, der konfiguriert ist, um eine vorbestimmte physikalische Größe zu messen, und konfiguriert ist, um die durch den Sensor (23) gemessene physikalische Größe drahtlos an die drahtlose Stromsendervorrichtung (1, 1B) zu übertragen.

## Revendications

1. Système de transmission de puissance sans fil comprenant :
un appareil émetteur de puissance sans fil (1, 1B) ; et
au moins un appareil récepteur de puissance sans fil (2, 2A, 2B, 2-1 à 2-3),
dans lequel le système de transmission de puissance sans fil est configuré pour transmettre sans fil une puissance provenant de l'appareil émetteur de puissance sans fil (1, 1B) vers l'appareil récepteur de puissance sans fil (2, 2A, 2B, 2-1 à 2-3), et
dans lequel le système de transmission de puissance sans fil est configuré pour modifier les paramètres de fonctionnement d'au moins l'un parmi l'appareil émetteur de puissance sans fil (1, 1B) et l'appareil récepteur de puissance sans fil (2, 2A, 2B, 2-1 à 2-3), de sorte qu'une valeur mesurée correspondant à la puissance transmise de l'appareil émetteur de puissance sans fil (1, 1B) à l'appareil récepteur de puissance sans fil (2, 2A, 2B, 2-1 à 2-3) et mise à la disposition de l'appareil récepteur de puissance sans fil (2, 2A, 2B, 2-1 à 2-3) soit augmentée en réponse à un déclencheur indicatif de l'occurrence d'un événement déclencheur prédéterminé,
**caractérisé en ce que**
les paramètres de fonctionnement d'au moins l'un parmi l'appareil émetteur de puissance sans fil (1, 1B) et l'appareil récepteur de puissance sans fil (2, 2A, 2B, 2-1 à 2-3) sont modifiés de sorte que la valeur mesurée correspondant à la puissance transmise de l'appareil émetteur de puissance sans fil (1, 1B) à l'appareil récepteur de puissance sans fil (2, 2A, 2B, 2-1 à 2-3) et mise à la disposition de l'appareil récepteur de puissance sans fil (2, 2A, 2B, 2-1 à 2-3) soit augmentée à l'avance, d'une durée prédéterminée à partir de l'événement de déclenchement prédéterminé qui est exécuté à un instant prédéterminé.

2. Système de transmission de puissance sans fil selon la revendication 1,
dans lequel les paramètres de fonctionnement d'au moins l'un de l'appareil émetteur de puissance sans fil (1, 1B) et l'appareil récepteur de puissance sans fil sont modifiés à partir de valeurs initiales apprises à l'avance afin de maximiser ou d'optimiser la puissance disponible par l'appareil récepteur de puissance sans fil (2, 2A, 2B, 2-1 à 2-3).

3. Système de transmission de puissance sans fil selon la revendication 1 ou 2,
dans lequel l'appareil émetteur de puissance sans fil (1, 1B) comprend un appareil d'antenne (ANT1) qui comporte un modèle de directivité variable ; et
dans lequel les paramètres de fonctionnement comprennent le modèle de directivité variable de l'appareil d'antenne (ANT1).

4. Système de transmission de puissance sans fil selon la revendication 1 ou 2,
dans lequel l'appareil récepteur de puissance sans fil (2, 2A, 2B, 2-1 à 2-3) comprend un appareil d'antenne (ANT2A) qui comporte un modèle de directivité variable ; et
dans lequel les paramètres de fonctionnement comprennent le modèle de directivité variable de l'appareil d'antenne (ANT2A).

5. Système de transmission de puissance sans fil selon la revendication 1 ou 2,
dans lequel l'appareil récepteur de puissance sans fil (2, 2A, 2B, 2-1 à 2-3) comprend un circuit d'adaptation (24) qui comporte une impédance variable ; et
dans lequel les paramètres de fonctionnement comprennent l'impédance variable du circuit d'adaptation (24).

6. Système de transmission de puissance sans fil selon la revendication 1 ou 2,
dans lequel l'appareil récepteur de puissance sans fil (2, 2A, 2B, 2-1 à 2-3) comprend un circuit convertisseur de puissance (21) qui comporte un rapport élévateur et un rapport abaisseur variables ; et
dans lequel les paramètres de fonctionnement comprennent le rapport élévateur et le rapport abaisseur variables du circuit convertisseur de puissance (21).

7. Système de transmission de puissance sans fil selon l'une quelconque des revendications 1 à 6,
dans lequel l'appareil récepteur de puissance sans fil (2, 2A, 2B, 2-1 à 2-3) comprend un circuit émetteur de signal (26) qui est configuré pour transmettre sans fil un signal de test ;
dans lequel l'appareil émetteur de puissance sans fil (1, 1B) comprend un circuit récepteur de signal (15) qui est configuré pour recevoir sans fil le signal de test, et mesurer une intensité d'un signal de test reçu ; et
dans lequel le système de transmission de puissance sans fil est configuré pour modifier les paramètres de fonctionnement d'au moins l'un de l'appareil émetteur de puissance sans fil (1, 1B) et l'appareil récepteur de puissance sans fil (2, 2A, 2B, 2-1 à 2-3), de sorte que l'intensité du signal de test reçu en tant que valeur mesurée soit augmentée.

8. Système de transmission de puissance sans fil selon l'une quelconque des revendications 1 à 6,
dans lequel l'appareil émetteur de puissance sans fil (1, 1B) comprend un circuit émetteur de signal (13) qui est configuré pour transmettre sans fil un signal de test ;
dans lequel l'appareil récepteur de puissance sans fil (2, 2A, 2B, 2-1 à 2-3) comprend un circuit récepteur de signal (27) qui est configuré pour recevoir sans fil le signal de test, et mesurer une intensité du signal de test reçu ; et
dans lequel le système de transmission de puissance sans fil est configuré pour modifier les paramètres de fonctionnement d'au moins l'un de l'appareil émetteur de puissance sans fil (1, 1B) et l'appareil récepteur de puissance sans fil (2, 2A, 2B, 2-1 à 2-3), de sorte que l'intensité du signal de test reçu en tant que valeur mesurée soit augmentée.

9. Système de transmission de puissance sans fil selon l'une quelconque des revendications 1 à 8,
dans lequel l'appareil récepteur de puissance sans fil (2, 2A, 2B, 2-1 à 2-3) comprend un dispositif de charge ; et
dans lequel le système de transmission de puissance sans fil est configuré pour modifier les paramètres de fonctionnement d'au moins l'un de l'appareil émetteur de puissance sans fil (1, 1B) et l'appareil récepteur de puissance sans fil (2, 2A, 2B, 2-1 à 2-3), de sorte que la puissance fournie au dispositif de charge en tant que valeur mesurée soit augmentée.

10. Système de transmission de puissance sans fil selon l'une quelconque des revendications 1 à 8,
dans lequel l'appareil récepteur de puissance sans fil (2, 2A, 2B, 2-1 à 2-3) comprend un dispositif de charge ; et
dans lequel l'appareil récepteur de puissance sans fil (2, 2A, 2B, 2-1 à 2-3) est configuré pour acquérir la valeur mesurée lorsque le dispositif de charge est éteint, et allumer le dispositif de charge lorsque la valeur mesurée est égale ou supérieure à une valeur seuil.

11. Système de transmission de puissance sans fil selon l'une quelconque des revendications 1 à 10,
dans lequel l'appareil récepteur de puissance sans fil (2, 2A, 2B, 2-1 à 2-3) comprend un capteur (23) qui est configuré pour mesurer une quantité physique prédéterminée, et est configuré pour transmettre sans fil la quantité physique mesurée par le capteur (23) à l'appareil émetteur de puissance sans fil (1, 1B).
